# EUROPEAN PATENT SPECIFICATION

(11) **EP 4 540 524 B1**
(45) Date of publication and mention of the grant of the patent: **15.04.2026**
(21) Application number: 23744499.7
(22) Date of filing: 20.07.2023
(51) Int. Cl.: F03D 13/40, F03D 80/00

(54) **BLADE GUIDING SYSTEM FOR A WIND TURBINE BLADE RACK**
BLATTFÜHRUNGSSYSTEM FÜR EIN WINDTURBINENSCHAUFELGESTELL
SYSTÈME DE GUIDAGE DE PALE D'UN RACK DE PALES D'ÉOLIENNE

(30) Priority: 28.07.2022 EP 22187608
(43) Date of publication of application: 23.04.2025
(73) Proprietor: Siemens Gamesa Renewable Energy A/S, 7330 Brande (DK)
(72) Inventor: DIPASHA, Dipasha, 110052, Delhi (IN); MOHAN, Murali, BANGALORE, KARNATAKA 560008 (IN); POULSEN, Henning, 6900 Skjern (DK)
(74) Representative: SGRE-Association
(86) International application number: PCT/EP2023/070101
(87) International publication number: WO 2024/022930

(56) References cited:
- DE-A1- 102015 119 623
- KR-B1- 101 973 080
- KR-B1- 102 325 092
- US-A1- 2017 370 346

## Description

The invention refers to a blade guiding system for guiding a wind turbine blade during a positioning of the wind turbine blade in a wind turbine blade rack, a wind turbine blade rack, a cargo vessel and a method for positioning at least one wind turbine blade in a blade rack.

In the construction of off-shore wind farms, the transport of wind turbine blades from the place of their manufacture to their destination is commonly at least partially carried out by cargo vessels. In order to ensure a non-destructive transport, the wind turbine blades are placed in holding devices on said cargo vessels, which keep the wind turbine blades in a fixed position during transport. These holding devices can usually hold a plurality of wind turbine blades, preferably in a matrix-like structure, and are known as wind turbine blade racks or simply blade racks. The matrix like structure can be described by rows and columns, whereby a single wind turbine blade rack may comprise a plurality of rows and/or columns. Commonly, for loading or unloading a blade rack, the wind turbine blades are lowered and/or lifted along said columns in a vertical or essentially vertical direction for positioning said wind turbine blades in the blade rack on a certain height level of a column. Multiple columns beside each other form at least one row. Along one column, multiple blades can be stored above each other.

In the context of the present invention, the rows of a blade rack shall extend in horizontal direction whereby the columns extend in vertical direction.

Commonly, the wind turbine blades are positioned in the blade rack in a vertical or essentially vertical orientation with respect to an assumed connecting line between the leading edge and the trailing edge of the wind turbine blades. However, this has the disadvantage that the wind attack surface formed by a wind turbine blade in the blade rack is increased compared to a horizontal or substantially horizontal orientation of the wind turbine blade. As the power output of wind turbines steadily grows and the length of the wind turbine blades increases accordingly, this effect is gaining importance due to an increasing surface of the wind turbine blades and therefore a higher susceptibility to unwanted blade movement due to wind effects during loading and unloading of the blade rack as well as increasing wind forces transmitted from the wind turbine blades on the blade rack during transport.

Increasing forces to be absorbed by the blade rack during transport of the wind turbine blades require a more stable construction of the blade rack and therefore higher material consumption as well as correspondingly higher costs and a higher weight. Further, in a vertical or essentially vertical orientation, undesired blade movements during loading and/or unloading processes performed on the wind turbine blade rack are more likely as the wind turbine blades pose a larger wind-attacking surface, which makes it difficult to load wind turbine blades into or remove wind turbine blades from the blade rack in a time-efficient manner without damaging the wind turbine blades. Also, the maneuverability of the cargo vessels may be adversely affected in strong wind conditions as the wind turbine blades may act as a kind of sail in a vertical or essentially vertical orientation.

A horizontal or essentially horizontal orientation of the wind turbine blades in the blade rack with respect to an assumed connecting line between the leading edge and the trailing edge of the wind turbine blades allows for a reduction of the wind loads applied to the wind turbine blades respectively the blade rack during transport and loading and/or unloading operations. However, such an orientation of the wind turbine blades carries the risk of rapid damage to the wind turbine blades when positioning them in or removing them from the blade rack. The reason for that is, that with such an orientation of the wind turbine blades, the sensitive areas of the wind turbine blades at the leading and trailing edge may easily come into contact with structural elements of the blade rack when the wind turbine blade is loaded into or removed from the blade rack for example by a crane and can thus be damaged easily. Damage to the wind turbine blade, especially in sensitive sections of the wind turbine blade such as the leading edge or trailing edge, can have adverse effects on its structural integrity but also on its aerodynamic performance.

Methods for assembling off-shore wind turbines can be found in KR 102 325 092 B1 and KR 101 973 080 B1. A method for use of a wind turbine rack can be found in US 2017/370346 A1.

It is therefore the objective of the present invention to overcome at least one of the aforementioned disadvantages at least partially. In particular, it is the object of the present invention to provide a blade guiding system, a wind turbine blade rack, a cargo vessel and a method for use of a wind turbine blade rack which allow for a safe and efficient use of a wind turbine blade rack with regard to decreasing the risk of damaging wind turbine blades during loading and/or unloading operations, preferably while the wind turbine blades are in a horizontal or essentially horizontal orientation with respect to an assumed connecting line between the leading edge and the trailing edge of the wind turbine blades during loading and/or unloading operations on and/or when positioned in the blade rack.

The aforementioned task is solved by a blade guiding system having the features of claim 1, a wind turbine blade rack having the features of claim 11, a cargo vessel having the features of claim 12 and a method for use of a wind turbine blade rack having the features of claim 13. Features and details which are described in connection with the blade guiding system according to the present invention also apply in connection with the wind turbine blade rack, the cargo vessel and the method for use of a wind turbine blade and vice versa, such that reference is or can always be made mutually with regard to the disclosure concerning the individual aspects of the invention.

The invention provides a blade guiding system, preferably for use with a wind turbine blade rack, for guiding at least a section of at least one wind turbine blade during a positioning of the wind turbine blade in or a removal of the wind turbine blade from a wind turbine blade rack comprising at least one blade guiding unit. The blade guiding unit further comprises at least one, preferably vertical or essentially vertical, guiding rail and at least one trolley unit, wherein said trolley unit is movably mounted on said guiding rail such that said trolley unit is at least partially movable along said guiding rail. Further, said trolley unit comprises at least one spacer element for, preferably at least temporarily, avoiding contact between at least a section of the wind turbine blade rack, preferably at least one structural element of the blade rack and/or at least one support structure of the wind turbine blade rack, and at least a section of the wind turbine blade, preferably at least a section of the leading edge and/or at least a section of the trailing edge, when positioning the wind turbine blade in or removing the wind turbine blade from the blade rack.

In other words, a blade guiding system is provided for guiding at least a section of at least one wind turbine blade when said wind turbine blade is positioned in or removed from a wind turbine blade rack in order to avoid contact between at least a section of the wind turbine blade and structural elements of the wind turbine blade rack during loading and/or unloading operations performed on the wind turbine blade rack. The blade guiding system according to the present invention comprises at least one blade guiding unit which further comprises at least one guiding rail. As wind turbine blades are at least partially loaded in or unloaded from a wind turbine blade rack along a vertical or essentially vertical direction (for example by a crane), the guiding rail may be oriented in a vertical or essentially vertical direction. The guiding unit further comprises at least one trolley unit which is at least partially arranged on the guiding rail in order to be able to at least partially move along said guiding rail in accordance with a wind turbine blade loaded into or unloaded from the wind turbine blade rack. A movement of a trolley unit in accordance with a wind turbine blade may comprise that at least a vertical and/or horizontal movement of the blade is performed in an equal or essentially equal manner by the trolley unit. The trolley unit further comprises at least one spacer element which prevents sensitive areas of the wind turbine blade, such as at least a section of the leading edge or trailing edge, at least partially from touching structural elements of the wind turbine blade rack during loading and/or unloading operations performed on the wind turbine blade rack in order to avoid damage of said sensitive areas.

The blade guiding system according to the present invention allows to move at least one trolley unit respectively at least one spacer element of the trolley unit in accordance with at least one wind turbine blade when said wind turbine blade is loaded into and/or unloaded from the blade rack. By moving at least one trolley unit respectively at least one spacer element of the trolley unit in accordance with the wind turbine blade, sensitive areas of the wind turbine blade, such as preferably the leading edge or the trailing edge, can be continuously guided in their movement as unintentional strong movements of the wind turbine blade for example due to wind effects can be at least partially prevented by at least one spacer element. Thus, contact between the wind turbine blade and structural elements of the blade rack during loading and/or unloading operations performed on the wind turbine blade rack can be effectively prevented by the blade guiding system according to the invention.

A structural element of a blade rack and/or a blade guiding unit may at least contribute to the structural integrity of the blade rack. The structural element may at least partially be provided as a steel beam. The structural element may also comprise a plurality of support elements and may preferably be at least partially provided as a truss construction.

A loading operation performed on a wind turbine blade rack may be performed with the target to position and/or fixate at least one wind turbine blade in the blade rack, preferably in order to ensure a safe transport of the wind turbine blade in the wind turbine blade rack. An unloading operation performed on a wind turbine blade rack may be performed with the target to lift and/or extract at least one wind turbine blade out of the wind turbine blade rack in order to put the wind turbine blade to further use, preferably for mounting it on a wind turbine.

It may be provided, that at least one blade guiding unit comprises a plurality of guiding rails. Preferably at least one blade guiding unit may comprise at least two or exactly two guiding rails. At least two guiding rails may be arranged with a, preferably horizontal, offset and/or may be oriented parallel or essentially parallel. This results in the advantage that multiple sections of a single wind turbine blade can be protected by a single blade guiding unit and/or that at least two different wind turbine blades can at least partially be guided by a single blade guiding unit. For example, a first guiding rail may be provided by a blade guiding unit to guide and protect at least a section of the trailing or leading edge of at least a first wind turbine blade, and a second guiding rail may be provided by said blade guiding unit to guide and protect at least a section of the leading or trailing edge of at least a second blade arranged. The first wind turbine blade and second wind turbine blade can preferably be arranged with at least a horizontal offset in the wind turbine blade rack and/or can be located in different columns of the blade rack.

In other words, it may be provided that at least one blade guiding unit comprises at least a first and a second guiding rail, wherein the first guiding rail is assignable to at least one side of a first column of a wind turbine blade rack, in order to guide and protect at least a section of at least a first wind turbine blade when said first wind turbine blade is loaded into or removed from said first column of the wind turbine blade rack. Further, the second guiding rail is assignable to at least one side of a second column of the wind turbine blade rack, in order to guide and protect at least a section of at least a second wind turbine blade, when said second wind turbine blade is loaded into or removed from said second column of the wind turbine blade rack. The first and second column may be arranged directly adjacent to each other, so that there are no further columns of the wind turbine blade rack between the first and second column.

It may further be provided that at least one guiding rail is at least partially provided as a steel beam. The steel beam may at least partially be formed as an I-beam (which is also known as a double T-beam). This results in a high stability of the guiding rail and a simple connection of at least one trolley unit to a guiding rail to ensure a smooth and safe movement of the trolley along said guiding rail.

It may further be provided in the scope of the present invention that at least two guiding rails of at least one blade guiding unit are connected by at least one connection element. At least one connection element may at least partially be provided as a steel beam. The steel beam may at least partially be formed as an I-beam (which is also known as a double T-beam). The connection element may at least partially be provided as a cross member and/or may be oriented perpendicularly or essentially perpendicularly to at least one, preferably both, of the guiding rails connected by the connection element. The arrangement of at least one connection element can increase the structural stability of a blade guiding unit. At least one connection element may be a part of at least one maintenance platform and/or may be provided by a maintenance platform. In other words, at least one maintenance platform may be connected to at least two guiding rails in order to at least provide a connection between said guiding rails.

It may be provided that at least one spacer element has a plate-like shape and/or is at least partially made of and/or coated with a rubber material and/or an elastomer. The spacer element may have a round, oval, rectangular, square or otherwise polygonal shape and/or cross-section. Additionally, and/or alternatively, at least one guiding surface of the spacer element may be at least partially made of and/or coated with a rubber material and/or a plastic. The plastic may be provided as a Polyurethane (PUR) and/or an elastomer. This has the advantage that contact between the spacer element and a wind turbine blade does not destroy the blade, as the material is correspondingly soft and/or flexible and can be at least partially deformed by the force applied on the spacer element by the blade and thus absorb the impact energy at least partially. Preferably, the plastic may be provided as a polyurethane with a shore hardness of 15 - 40, preferably 20 - 15, particularly 25 - 30. At least one spacer element and/or at least one layer of rubber material and/or plastic may be provided in a material thickness of 20 mm - 70 mm, particularly 25 mm - 60 mm, preferably 30 mm - 50 mm. A guiding surface of a spacer element shall be understood as a surface of the spacer element which points towards a wind turbine blade when said blade is guided by the spacer element and/or can be brought into contact with a wind turbine blade during loading and/or unloading operations at the wind turbine blade rack.

It is also conceivable in the context of the present invention that at least one spacer element is pivotably connected to the trolley unit, wherein preferably the spacer element is at least or only pivotable around a vertical or essentially vertical rotation axis. This offers the advantage that the spacer element can be optimally aligned with the geometry of a wind turbine blade. For example, the spacer element can be pivoted such that at least one guiding surface of the spacer element is aligned parallel or essentially parallel with a leading edge and/or trailing edge of at least one wind turbine blade when said blade is loaded into or unloaded from the wind turbine blade rack. A pivoting of at least one spacer element may at least partially be realized by at least one hinge. At least one trolley unit and/or spacer element may comprise a fixation mechanism to fix the spacer element in a desired position and prevent further unwanted pivoting during loading and/or unloading operations performed in the blade rack.

It may also be provided in the course of the present invention that at least one blade guiding comprises a plurality of trolley units. Preferably at least one blade guiding unit may comprise at least two or exactly two trolley units. On each guiding rail of the blade guiding unit, at least one trolley unit may be arranged. Preferably, exactly one trolley unit can be arranged on each guiding rail. This keeps the number of trolley units and thus the complexity of the blade guiding system low.

It is further conceivable within the scope of the invention that the blade guiding system comprises a plurality of blade guiding units, preferably at least two or at least four or at least six or at least ten blade guiding units. At least two blade guiding units may be identical and/or blade guiding units according to embodiments of the present invention. The number of blade guiding units can be flexibly adapted to the use of the blade guiding system in connection with a specific wind turbine blade rack. Preferably, the number of blade guiding units can be given by the relation N_{c}+1 wherein N_{c} is the number of columns of the blade guiding system. This allows the wind turbine blades to be at least partially guided and protected in all columns of the wind turbine blade rack on at least two sides of the wind turbine blades during loading, which allows an effective avoidance of damage to wind turbine blades loaded in or unloaded from the wind turbine rack independent of the columns of the wind turbine rack on which loading and/or unloading operations are performed.

It may be provided that at least one trolley unit comprises at least one detection unit for detecting a movement of at least one wind turbine blade relative to at least one trolley unit or vice versa in a detection range of the detection unit, preferably when the wind turbine blade is loaded into or removed from the wind turbine blade rack. The movement detected by the detection unit may at least be a vertical or essentially vertical movement of the wind turbine blade relative to the trolley unit or vice versa. The detection of a movement of the wind turbine blade relative to the trolley unit has the advantage that the trolley unit and therefore at least one spacer element of the trolley unit can be moved in accordance with the wind turbine blade in order to avoid contact between at least sections of the wind turbine blade and structural elements of the wind turbine blade rack, when the wind turbine blade is loaded into or removed from the blade rack.

Preferably, the detection range can be understood as a spatial range in which a movement of a wind turbine blade relative to the trolley unit or vice versa is detectable by the detection unit. Preferably, no detection by the detection unit is performed when the wind turbine blade moves out of said detection range. In other words, it may be provided that a detection of a movement of a wind turbine blade relative to the trolley unit or vice versa by the detection unit is only performed when the wind turbine blade is moved relative to the trolley unit within the detection range of the detection unit. A relative movement of a wind turbine blade to a trolley unit can be achieved both by a movement of the wind turbine blade during a standstill of the trolley unit and by a movement of the trolley unit during a standstill of the wind turbine blade. Also, a combined, at least temporarily simultaneous movement of wind turbine blade and trolley unit can achieve a relative movement of the wind turbine blade to the trolley unit.

It may further be provided that at least one detection unit comprises at least one, preferably exactly one, detection rod and/or that at least one detection unit comprises at least one sensor element, wherein an impact of force on the detection rod is detectable by the sensor element. The detection rod may be provided for at least temporarily establishing and/or maintaining a contact between the trolley unit and at least one wind turbine blade when the wind turbine blade is loaded into or unloaded from the blade rack. The sensor element can basically be designed as any sensor element that can detect a force acting on and/or a deformation of the detection rod. Such a design allows for a reliable detection as well as for a cost-efficient design.

Particularly, the sensor element can be designed as a strain sensor, preferably a strain gauge and/or as a force sensor, preferably a piezoelectric sensor and/or as a, preferably static, torque sensor. This results in the advantage of a cost-effective design and reliable detection. Several identical or different sensor elements may be applied and/or comprised by the detection unit. The detection unit may comprise alternative or additional sensor elements such as an acceleration and/or velocity and/or temperature and/or pressure and/or humidity sensor.

The detection range of at least one detection unit may extend at least downwards from a detection rod of said detection unit at least along a vertical or essentially vertical and/or a downwards and/or with the direction of gravity pointing direction, preferably when the detection rod is in an unloaded condition and/or free of contact with a wind turbine blade. In other words, at least one limit of the detection range may be given by the position of a detection rod when the detection rod is in an unloaded condition and/or free of contact with a wind turbine blade as a movement of a wind turbine blade relative to a trolley unit or vice versa is only detected when the wind turbine blade is lowered onto the detection rod from above the detection rod.

Alternatively, or additionally, it may be provided that at least one sensor element is designed for a contactless detection of a movement of at least one wind turbine blade relative to at least one trolley unit or vice versa. The sensor element may be a capacitive sensor element. This allows a design with less wear and tear, since a repetitive mechanical contact between parts, for example between a detection rod and a wind turbine blade, is avoided. At least one sensor element may be integrated in a spacer element.

The detection rod may be at least partially made from a plastic, preferably a thermoplastic and/or a fiber reinforced plastic. This results in a particularly long service life of the detection rod, as the detection rod is subjected to recurring loads under the influence of strain, and thus reduces the maintenance requirements of the blade guiding system, as well as in a cost-effective design. The fiber used may preferably be carbon fiber, glass fiber, plastic fiber, metal fiber and/or other fiber. Also, different types of fiber may be applied in a single detection rod. Also, it may be provided that the detection rod is at least partially made from a, preferably magnetic, metal material, in particularly in the area and/or in proximity to where the detection rod is attached to the trolley unit. At least one metallic section of the detection rod can be formed as a metallic inlay in or as a metallic coating of the detection rod.

It may further be provided that at least one detection unit and/or one control unit comprises at least one evaluation unit, wherein said evaluation unit is in or can be brought into communication with at least one sensor element, so that sensor data detected by the sensor element can be received and/or evaluated in the evaluation unit. The evaluation unit may be equipped with at least a processor and/or at least one, preferably permanent and/or volatile, data storage device and/or at least one communication interface for a, preferably wired or wireless, communication with at least one sensor element and/or other devices such as for example a control unit of the blade guiding system, particularly a control unit of the blade guiding unit. The evaluation of a sensor data detected by the sensor element may comprise a comparison with at least one threshold value. The threshold value may exemplarily be a specified strain or a specified value of force applied to the detection rod or a specified value of torque and may be compared to strain of the detection rod or a force applied to the detection rod or a torque transmitted by the detection rod. It may be provided that when the threshold value is exceeded, a signal can be or is sent from the evaluation unit to a control unit of the blade guiding system and/or the blade guiding unit, that a movement of the trolley unit is required in order to ensure that the trolley unit follows the movement of a wind turbine blade when the wind turbine blade is loaded into or removed from the wind turbine blade rack.

It is further conceivable within the scope of the invention, that at least one detection rod is pivotably connected to the trolley unit, wherein the detection rod can be pivoted at least between a detection position and a non-detection position. The axis of rotation and/or pivoting may be oriented perpendicular or essentially perpendicular to the longitudinal extension of the detection rod and/or in a vertical or essentially vertical direction. The detection position shall be understood as a position in which a movement of a wind turbine blade relative to the trolley unit can be detected by means of the detection rod and/or the detection unit, as the detection rod can be brought into contact with a wind turbine blade which is moved past the trolley unit during loading and/or unloading of the wind turbine blade rack. The non-detection position shall be understood as a position in which a movement of a wind turbine blade relative to the trolley unit cannot be detected by the detection rod and/or the detection unit, as the detection rod cannot be brought into contact with a wind turbine blade which is moved past the trolley unit during loading and/or unloading of the wind turbine rack. This offers the advantage that the trolley unit can be easily moved to a desired position required for a new unloading or loading operation after finishing a previous loading or unloading operation in the wind turbine blade rack, without being blocked or disturbed by a wind turbine blade already positioned in the blade rack.

It may be provided that the detection rod can be fixed and/or latched in at least the detection position and/or the non-detection position. This offers the advantage that an unintentional change in position of the rod can be effectively avoided during operation of the blade guiding system on a blade rack. Fixing of the detection rod in at least one position can be achieved by a form-fitting and/or force-fitting, preferably reversible, connection between the trolley unit and the rod. The connection may be for example a snap-in connection and/or a magnetic connection. For example, a magnet can be arranged in the rod, which can be brought into operative connection with at least one magnet, preferably at least two or exactly two magnets arranged in the trolley unit in both the detection position and the non-detection position so that the detection rod is secured in both positions by magnetic forces, and unwanted movement of the detection rod between the detection position and the non-detection position is effectively prevented.

It may be further provided that for a change between the detection position and the non-detection position, a pivoting of the rod by at least 60°, at least 80° or at least or exactly or substantially exactly 90° (degree angle) is required. It may be provided that in the detection position, the detection rod is oriented inclined to at least one guiding surface of at least one spacer element of the trolley unit. The inclination angle may be between 45° and 90°, preferably between 60° and 90°, more preferably 90° or essentially 90°, wherein all values are defined in degree of angle. This offers the advantage that a contact between the detection rod and a wind turbine blade can be reliably ensured during loading and/or unloading operations on the blade rack. It further may be provided that in the non-detection position, the detection rod is oriented parallel or essentially parallel to at least one guiding surface of at least one spacer element of the trolley unit. This results in the advantage of a particularly space-saving arrangement and thus easy movability of the trolley unit past wind turbine blades arranged in the blade rack.

It is further conceivable within the scope of the invention that at least one trolley unit comprises at least one roller, wherein during a movement of the trolley unit along the guiding rail, at least one roller rolls on a surface of the guiding rail. This allows a smooth movement of the trolley unit along the guiding rail while moving the trolley unit in accordance with a wind turbine blade during loading and/or unloading operations of the wind turbine rack.

It may be provided that at least one trolley unit comprises at least one pair of rollers, preferably comprising two rollers, wherein, preferably when the trolley unit is mounted on a guiding rail, said pair of rollers encloses the guiding rail at least partially and/or forms an at least partially form-fitting and/or force-fitting connection with the guiding rail. This allows for an easy guidance of the trolley unit along the guiding rail. It may be provided that at least one pair of rollers at least partially encloses a flange of an I-beam profile of said guiding rail. It may further be provided that each of the two rollers of said pair of rollers rolls on opposite sides and/or opposing surfaces and/or sides of the guiding rail and/or the flange of an I-beam profile, when the trolley unit is moved along the guiding rail.

It may further be provided that at least one trolley unit comprises a brake system, wherein a movement of the trolley unit along a guiding rail can be slowed down and/or stopped and/or a position of the trolley unit along a guiding rail can be fixed by the brake system. It may be provided that said brake system, preferably at least one brake shoe of the brake system, can be brought into or is in operative connection with at least one guiding rail of a blade guiding unit and/or at least one roller of the trolley unit. The brake system may comprise at least one brake shoe, preferably at least two or exactly two brake shoes. It may be provided that at least one brake shoe can at least partially by brought into, preferably frictional, contact with at least one guiding rail, preferably at least one surface of the guiding rail, and/or at least one roller. It may be provided that the brake system comprises at least one pair of brake shoes, wherein the two brake shoes of said pair of brake shoes are at least partially arranged opposite of each other. It may further be provided that at least two brake shoes, preferably of a pair of brake shoes, at least partially enclose the guiding rail at least in sections and/or at least temporarily form a form-fitting and/or force fitting connection with the guiding rail, preferably when the trolley unit is mounted on the guiding rail. It may be provided that at least two brake shoes, preferably from a pair of brake shoes, at least partially enclose a web of an I-beam profile of at least one guiding rail and/or that each of the two brake shoes can be brought into operative connection and/or frictional contact with a surface and/or side of the guiding rail, wherein the surfaces and/or sides related to the at least two brake shoes are opposing each other.

It is conceivable within the scope of the invention that at least one blade guiding unit comprises at least one drive unit, wherein said drive unit is operatively connected and/or connectable to at least one trolley unit of the blade guiding unit such that the trolley unit can be moved at least partially along at least one guiding rail of the blade guiding unit by the drive unit. The drive unit can be an electric drive unit, preferably an electric motor. This results in a simple and at least partially automatable movement of at least one trolley unit along a guiding rail. It may be provided that at least one drive unit is operatively connected and/or connectable to at least two trolley units, whereby preferably at least two trolley units can be driven independently by said drive unit. In other words, at least two trolley units can be moved independently along at least one guiding rail and/or different guiding rails by a single drive unit.

The operative connection between at least one drive unit and at least one trolley unit at least partially be provided by means of at least one drive cable. At least one drive cable can at least partially be implemented via a steel cable. Preferably, at least one blade guiding unit comprises at least one drive cable. In other words, it may be provided that at least one trolley unit is connected to at least one drive cable, so that a movement of the drive cable is at least partially transmittable to the trolley unit, and that at least one drive unit is in operative connection with the drive cable, such that the drive cable can be moved by the drive unit, so that by a movement of the drive cable by the drive unit, at least one trolley unit is movable along a guiding rail. This offers the advantage that no drive elements such as individual drive units have to be integrated into the trolley units of a blade guiding unit, and the structure of the trolley unit can therefore be kept simple. It is also possible to avoid the failure of individual trolley units at hard-to-reach positions along the guiding rail, which allows for a reduction of the maintenance effort of the blade guiding system.

At least one drive cable can be routed at least in sections along at least one guiding rail. At least one guiding rail may comprise at least one roller, wherein at least one drive cable is at least partially guided by said roller and/or wherein said roller is rotatably mounted on said guiding rail. The rollers allow for a low wear movement of the drive cable along the guiding rail or guiding rails.

It may also be provided that at least one trolley unit comprises at least one individual drive unit, wherein said drive unit is operatively connected to the trolley unit, preferably to at least one roller of the trolley unit, such that the trolley unit can be moved at least partially along at least one guiding rail of the blade guiding unit. This has the advantage of eliminating the need of drive cables or other central drive systems, thus reducing the complexity of the blade guiding unit. The drive unit can be an electric drive unit, preferably an electric motor. The drive unit may comprise electrical contacts, preferably brush contacts, wherein the electrical contacts are in or can be brought into contact with at least one guiding rail, in order to receive a power supply through a, preferably continuous, contact between the electrical contacts and the guiding rail.

In this context, it may be provided that at least one conductor track is integrated in at least one guiding rail and/or arranged on a surface of at least one guiding rail, so that a power supply of at least one trolley unit can be established by applying an electrical current to said conductor track.

It may also be provided that at least one trolley unit comprises a power connection to which a current-carrying cable can be connected, for establishing a power supply of said trolley unit and/or at least one drive unit of said trolley unit.

It may be provided that at least one blade guiding unit comprises at least one maintenance platform for enabling a user of the blade guiding system to access at least one guiding rail at least partially. Preferably, at least one maintenance platform is in a fixed position connection with at least one guiding rail. In other words, it may be provided that at least one blade guiding unit comprises at least one maintenance platform arranged along at least one guiding rail. The maintenance platform may be used to provide a user of the blade guiding system with access to at least one section of at least one guiding rail. At least one maintenance platform may at least partially be in a force-fitting and/or form-fitting and/or material connection with at least one guiding rail. Preferably at least one maintenance platform may be at least partially arranged between at least two guiding rails and/or at least partially be in a force-fitting and/or form-fitting and/or material connection with at least two guiding rails. At least one maintenance platform may comprise a railing at least partially enclosing the maintenance platform, preferably along at least a portion of its edge, at least partially. This can effectively prevent a user falling off a platform. At least one maintenance platform may be positioned to at least partially align with an access system of the wind turbine blade rack such that the maintenance platform is accessible to a user via the access system of the blade rack when the blade guiding system is used with the blade rack. The access system may comprise at least one ladder or a plurality of ladders.

It is conceivable within the scope of the invention that at least one blade guiding unit comprises at least one base member to enable and/or support a stable stand of the blade guiding unit on a, preferably flat, surface and/or the ground. This results in the advantage of easy handling and safe operation of a blade guiding unit. The base member may be oriented at least partially perpendicular or essentially perpendicular to at least one guiding rail and/or may extend in a horizontal or substantially horizontal plane. The base member can comprise several structural elements, whereby at least one structural element can be a steel beam or steel profile. At least two structural elements may at least partially be in a form-fitting and/or force-fitting and/or material connection.

It may also be provided that the blade guiding system and/or at least one blade guiding unit comprises at least one control unit wherein said control unit is in and/or can be brought into, preferably wired or wireless, communication with at least one drive unit of the blade guiding system and/or one drive unit of at least one blade guiding unit and/or at least one trolley unit. The control unit can be configured to control the operation of at least one drive unit and/or at least one trolley unit. The control of operation may at least comprise activating at least one drive unit and/or deactivating at least one drive unit, thus starting or ending the movement of at least one trolley unit along a guiding rail. The control operation may further comprise activating and/or deactivating at least one brake system of at least one trolley unit. It may be provided that the control unit is in and/or can be brought into, preferably wired or wireless, connection with at least one detection unit, preferably one evaluation unit. In this way, the control unit can control at least one drive unit and/or at least one brake system depending on sensor and/or evaluation data received from at least one detection unit and/or evaluation unit. In this context, it may also be provided that in at least one blade guiding unit, the evaluation unit is comprised by the control unit. At least one control unit may be integrated in a drive unit. This allows for the advantage of a compact design.

The above-mentioned task is further solved by a wind turbine blade rack for at least temporarily securing the position of at least one wind turbine blade, preferably on a cargo vessel, comprising at least a first support structure for at least partially receiving a root section of at least one wind turbine blade and a second support structure for at least partially receiving an airfoil section of at least one wind turbine blade, wherein the wind turbine blade rack further comprises at least one blade guiding system according to the invention, preferably a blade guiding system to any of claims 1 - 10. The advantages of the wind turbine blade rack are the same as those described above for the blade guiding system.

A support structure shall be understood as a structure in which the wind turbine blades can be fixed at least in sections in order to remain in a secured position for transport and structures related thereto, for example providing a sufficient stability of the blade rack. A support structure may comprise at least one structural element, preferably a plurality of structural elements, and/or may at least partially be provided as a truss construction and/or may comprise at least one steel beam, preferably a plurality of steel beams. For a safe fixation of at least one wind turbine blade in the wind turbine blade rack, multiple support structures may be comprised by a single wind turbine blade rack wherein at least one wind turbine blade may be arranged with different sections along its longitudinal extension in the different support structures.

At least one support structure, preferably at least the second support structure, may be composed of at least two, preferably vertical or essentially vertical, pillar elements. At least one pillar element may be provided as a truss construction. It may be provided that during loading and/or unloading of the wind turbine rack, the turbine blades must at least partially be lowered vertically between two pillar elements of at least one support structure in each case. In other words, it may be provided that two pillar elements of a support structure, preferably the second support structure, in each case form a column in the wind turbine blade rack, preferably with respect to the respective support structure, in which preferably a plurality of wind turbine blades may be arranged at least partially one above the other. As storage surfaces for the wind turbine blades, at least one, preferably horizontal or essentially horizontal, crossbar may extend between at least two or exactly two pillar elements. The crossbar may comprise additional means for fixation of a wind turbine blade. At least one crossbar may be pivotably mounted on at least one pillar element in order to allow the passage of at least one wind turbine blade past the cross member during loading and/or unloading operations on the wind turbine blade rack.

The wind turbine blade rack may comprise a plurality of, preferably at least two or more than two, support structures, wherein the support structures are arranged along a longitudinal extension of a wind turbine blade to be loaded into or removed from the wind turbine blade rack.

The term blade sections may refer to different sections of the blade along its longitudinal extension. A wind turbine blade can at least functionally (but also structurally) be divided into several sections along its longitudinal extension. A wind turbine blade may comprise at least a root section and an airfoil section. The root section comprises the blade root which is intended to be structurally coupled to the hub of the wind turbine in order to ensure that the wind turbine blade remains in connection with the wind turbine hub during wind turbine operation. The root section may at least partially have a circular or substantially circular cross section, and/or it has an insignificant contribution to the generation of lift when the wind turbine blade is exposed to wind. In the airfoil section, the outer shape of the blade commonly has an airfoil contour to generate a lift force in windy conditions. The airfoil section may extend from the root section to the blade tip. Additionally, there may be a transition section provided between the root section and the airfoil section in which the outer profile of the wind turbine blade is, preferably continuously, transitioned from the root profile to the airfoil section profile. The outer profile and/or contour of the wind turbine blade may further vary along its longitudinal extension as rotational speed of a blade increases towards the tip of the blade during operation.

It may be provided that at least one blade guiding unit, preferably all blade guiding units, are arranged in proximity and/or connection to at least one support structure of a wind turbine blade rack, preferably one pillar element of a support structure. Said support structure may be the second support structure. In other words, the blade guiding system may not be applied to the support structure for at least partially receiving a root section of at least one wind turbine blade, preferably the first support structure. This allows the sensitive sections of the blade such as the leading edge and trailing edge in the airfoil section of a wind turbine blade, to be protected effectively when loading said blade into or removing said blade from the wind turbine blade rack. The connection between at least one blade guiding unit and at least one support structure may at least partially be a form-fitting and/or force-fitting and/or material and/or reversible connection. At least one connection may at least partially be established via at least one maintenance platform of a blade guiding unit.

The above-mentioned task is further solved by a cargo vessel for the at least temporary transport of at least one wind turbine blade comprising at least one wind turbine blade rack according to the present invention, preferably at least one wind turbine blade rack according to claim 11. The advantages of the cargo vessel are the same as those described above for the blade guiding system and/or the wind turbine blade rack.

It may be provided that said cargo vessel comprises at least one crane for lowering and/or lifting at least one wind turbine blade during loading and/or unloading operations performed on at least one wind turbine blade rack.

The above-mentioned task is further solved by a method for use of a wind turbine blade rack, comprising at least the following steps:
Moving at least one wind turbine blade in proximity of at least a section and/or at least one support structure and/or at least one structural element of the wind turbine blade rack, during a loading operation performed on the wind turbine rack,
detecting a movement of the wind turbine blade relative to at least one trolley unit and/or spacer element of a blade guiding system of the wind turbine blade rack,
moving at least one trolley unit and/or spacer element at least temporarily in accordance with the wind turbine blade for at least temporarily avoiding contact between at least a section and/or at least one support structure and/or at least one structural element of the wind turbine blade rack and at least a section of the wind turbine blade.

The method according to the invention offers the advantage that a wind turbine blade can be efficiently guided during a positioning of the wind turbine blade in or a removal of the wind turbine blade from a wind turbine blade rack in order to protect the wind turbine blade from taking damage due to unintended contact with the wind turbine blade rack.

The advantages of the method according to the present invention are the same as those described above for the blade guiding system and/or the wind turbine blade rack and/or the cargo vessel.

It may be provided, that at least two steps of steps a) - c) are carried out at least partially simultaneously and/or overlap in their execution in terms of time.

Within the scope of the present invention, it may further be provided that additionally, preferably after step c), at least one of the following steps is performed:
Moving at least one wind turbine blade in proximity of at least a section and/or at least one support structure and/or at least one structural element of the wind turbine blade rack during an unloading operation performed on the wind turbine rack,
detecting a movement of the wind turbine blade relative to at least one trolley unit and/or spacer element of a blade guiding system of the wind turbine blade rack,
moving at least one trolley unit and/or spacer element at least temporarily in accordance with the wind turbine blade for at least temporarily avoiding contact between at least a section and/or at least one support structure and/or at least one structural element of the wind turbine blade rack and at least a section of the wind turbine blade.

It may be provided that at least two steps of steps d) - f) are carried out at least partially simultaneously and/or overlap in their execution in terms of time.

It may also be provided that the section of a wind turbine blade guided by a trolley unit and/or a spacer element is a section of the leading edge and/or trailing edge of said wind turbine blade.

It may further be provided that during step b) and/or during step e), at least one wind turbine blade is in, preferably continuous, contact with at least one detection rod of the blade guiding system. The detection rod may be part of a detection unit of the blade guiding system.

It may also be provided that additionally, preferably before step b) and/or before step e), the following step is performed:
Moving, preferably pivoting, at least one detection rod from a non-detection position into a detection position.

It may further be provided, that additionally, preferably after step c) and/or after step f), the following steps are performed:
Moving, preferably pivoting, at least one detection rod from a detection position into a non-detection position,
moving at least one trolley unit at least partially along at least one guiding rail in order to initiate a new loading and/or unloading operation on the blade rack.

The movement of the wind turbine blade in proximity to at least a section of the blade rack, preferably in proximity to at least one support structure and/or structural element of the wind turbine blade rack, in step a) and/or d), may be at least a movement of the wind turbine blade in and/or at least partially along at least one column and/or line provided by the wind turbine blade rack.

Further advantages, features and details of the invention will be apparent from the following description, in which several embodiments of the invention are described in detail with reference to the drawings.

Thereby, the invention is shown in the following figures:
- Fig. 1: shows a perspective view of a blade guiding system and blade guiding unit according to the invention,
- Fig. 2: shows a perspective view of a blade guiding system and blade guiding unit according to the invention,
- Fig. 3: shows a perspective view of a trolley unit,
- Fig. 4: shows a top view of a spacer element guiding a wind turbine blade,
- Fig. 5: shows a perspective view of a trolley unit,
- Fig. 6: shows a perspective view of a blade guiding rack according to the invention,
- Fig. 7: shows a perspective view of a support structure,
- Fig. 8: shows a perspective view of a support structure,
- Fig. 9: shows a perspective view of a support structure,
- Fig. 10: shows a schematic view of a wind turbine blade,
- Fig. 11: shows a schematic view of a cargo vessel according to the invention and
- Fig. 12: shows a schematic view of a method for use of a wind turbine rack according to the invention.

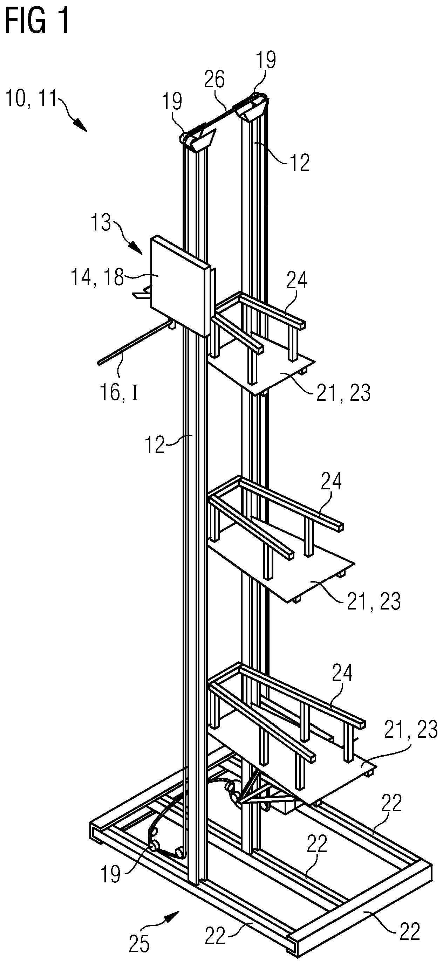

Fig. 1 shows a perspective view of a blade guiding system 10 according to the invention for guiding at least a section of at least one wind turbine blade 1 during a positioning of the wind turbine blade 1 in or a removal of the wind turbine blade 1 from a wind turbine blade rack 100. The blade guiding system 10 comprises at least one blade guiding unit 11. The blade guiding unit 11 further comprises two vertical or essentially vertical oriented guiding rails 12. The guiding rails 12 are oriented parallel or essentially parallel and are arranged with a horizontal offset. For the sake of clarity, only a single blade guiding unit 11 is shown. However, the blade guiding system 10 may comprise a plurality of blade guiding units 11, wherein at least two blade guiding units 11, preferably all blade guiding units 11, may be identical or essentially identical.

The guiding rails 12 are at least partially provided as steel beams having an I-beam profile.

The blade guiding unit 11 further comprises at least one trolley unit 13, wherein said trolley unit 13 is movably mounted on a guiding rail 12 such that the trolley unit 13 is at least partially movable along said guiding rail 12. The trolley unit 13 further comprises at least one spacer element 14 for at least temporarily avoiding contact between at least one structural element of a wind turbine blade rack 100 and at least a section of at least one wind turbine blade 1, when positioning said wind turbine blade 1 in said wind turbine blade rack 100.

The spacer element 14 has a plate like shape and is at least partially made of a rubber material and/or an elastomer. The spacer element 14 has a rectangular shape and/or cross section. The spacer element 14 provides at least one guiding surface 18 pointing towards a wind turbine blade 1 when said wind turbine blade 1 is guided by the spacer element 14 during a movement of the spacer element 14 and/or trolley unit 13 in accordance with the wind turbine blade 1.

The blade guiding unit 11 further comprises a plurality of maintenance platforms 21 for enabling a user of the blade guiding system 10 to access at least one guiding rail 12 at least partially. Each maintenance platform 21 is at least partially arranged between the two guiding rails 12 and comprises a railing 24 at least partially enclosing the maintenance platform 21. Each maintenance platform 21 is in a fixed position connection with the two guiding rails 12 and thus simultaneously acts as a connection element 23 between the two guiding rails 12.

The blade guiding unit 11 further comprises a base member 25 to enable a stable stand of the blade guiding unit 11 on a flat surface, preferably a floor (e.g., of a cargo vessel). The base member is oriented perpendicular or essentially perpendicular to the two guiding rails 12 and extends in a horizontal or essentially horizontal plane. The base member comprises a plurality of structural elements 22 provided as steel beams, wherein said structural elements 22 are in a form-fitting and/or force-fitting and/or material connection.

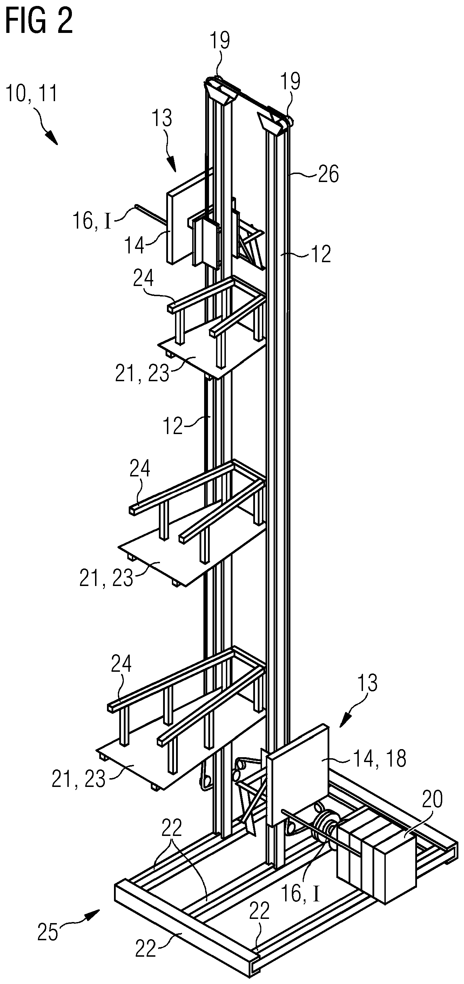

Fig. 2 shows a perspective view of a blade guiding system 10 according to the invention. The blade guiding unit 11 comprises two trolley units 13, wherein each trolley unit 13 is assigned to a guiding rail 12.

Therefore, each trolley unit 13 is assignable to a different column 103 of the wind turbine blade rack 100 when the blade guiding system 10 is applied with said wind turbine blade rack 100.

The blade guiding unit 11 further comprises at least one drive unit 20, wherein the drive unit 20 is operatively connected to at least one trolley unit 13. Thereby, at least one trolley unit 13 can be moved at least partially along at least one guiding rail 12 of the blade guiding unit 11. With regard to fig. 2, the drive unit 20 is in operative connection with both trolley units 13, whereby the trolley units 13 can be driven independently by the drive unit 20.

The operative connection between the drive unit 20 and the trolley units 13 is provided by means of at least one drive cable 26. The drive cable 26 is connected to at least one trolley unit 13 and can be moved by the drive unit 20 in order to transmit said movement of the drive cable 26 on the trolley unit 13 which results in a movement of the trolley unit 13 along the guiding rail 12. The drive cable 26 is at least partially routed along at least one guiding rail 12. Each guiding rail 12 further comprises at least one roller 19 for guiding the drive cable 26 and allowing a low wear movement of the drive cable 26 along the guiding rails 12.

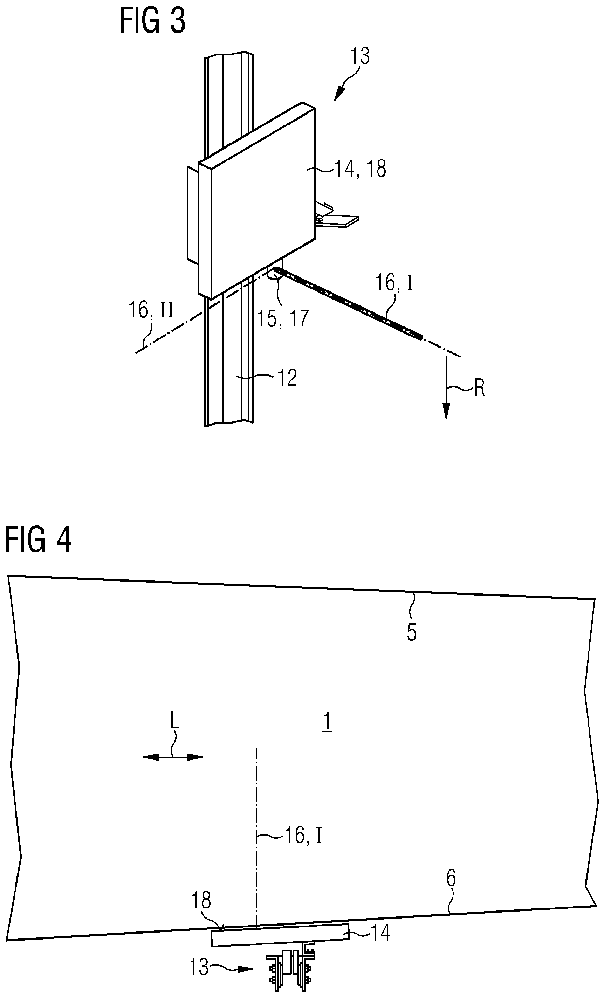

Fig. 3 shows a perspective view of a trolley unit 13 mounted on a guiding rail 12. The trolley unit 13 comprises at least one detection unit 15 for detecting a movement of at least one wind turbine blade 1 relative to at least one trolley unit 13 or vice versa in a detection range R of the detection unit when the wind turbine blade 1 is loaded into or removed from the wind turbine blade rack 100. The movement detected by the detection unit 15 is at least a vertical movement of the wind turbine blade 1 relative to the trolley unit 13 or vice versa. The detection of a movement of the wind turbine blade 1 relative to the trolley unit 13 has the advantage that the trolley unit 13 and therefore at least one spacer element 14 of the trolley unit 13 can be moved in accordance with the wind turbine blade 1 in order to avoid contact between at least sections of the wind turbine blade 1 and structural elements 22 of the wind turbine blade rack 100, when the wind turbine blade 1 is loaded into or removed from the wind turbine blade rack 100.

The detection range R is a spatial range in which a movement of a wind turbine blade 1 relative to the trolley unit 13 or vice versa is detectable by the detection unit 15 and extends at least downwards from the detection rod 16 along a vertical or essentially vertical direction, when the detection rod is in an unloaded condition, as the detection rod 16 may at least partially bend down when a wind turbine blade 1 is lowered onto said detection rod 16.

The detection unit 15 comprises at least one detection rod 16 and at least one sensor element 17. The detection rod 16 is provided for at least temporarily establishing and/or maintaining contact between the trolley unit 13 and at least one wind turbine blade 1 when said wind turbine blade 1 is loaded into or unloaded from the wind turbine blade rack 100. The sensor element 17 is provided in order to detect an impact of force in the detection rod 16 as such impact of force indicates a contact between the detection rod 16 and a wind turbine blade 1. The sensor element 17 can also at least partially be located in or on the detection rod 16.

In fig. 3, the detection rod 16 is in a detection position I. The detection rod 16 is pivotably connected to the trolley unit 13, such that the detection rod 16 is pivotable between at least a detection position I and a non-detection position II. The axis of rotation extends perpendicular or essentially perpendicular to the longitudinal extension of the detection rod and along or essentially along a vertical direction. For the change between the detection position I and the non-detection position II, a pivoting or rotation of the detection rod 16 of essentially 90° (degree angle) is required. In the detection position I, the detection rod 16 is oriented inclined to the guiding surface 18 of the spacer element 14. In the non-detecting position II, the detection rod is oriented parallel or essentially parallel to the guiding surface 18 of the spacer element 14.

In the detection position I, a movement of a wind turbine blade 1 relative to the trolley unit 13 can be detected by means of the detection rod 16 and/or the detection unit 15, as the detection rod 16 can be brought into contact with a wind turbine blade 1 which is moved past the trolley unit 13 during loading and/or unloading of the wind turbine blade rack 100. In the non-detection position II, a movement of a wind turbine blade 1 relative to the trolley unit 13 cannot be detected by the detection rod 16 and/or the detection unit 15, as the detection rod 16 cannot be brought into contact with a wind turbine blade 1 which is moved past the trolley unit 13 during loading and/or unloading of the wind turbine rack.

Fig. 4 shows a top view of a spacer element 14 guiding a wind turbine blade 1. The guiding surface 18 is aligned parallel or essentially parallel with the leading edge 5 of the wind turbine blade 1. In fig. 4, the longitudinal extension L of the wind turbine blade is indicated by the arrow. The wind turbine blade 1 is at least partially in contact with the detection rod 16 in order to detect a movement of the wind turbine blade 1 relative to the trolley unit 13 or vice versa. According to the view in fig. 4, the detection rod 16 is located under the wind turbine blade 1. For the sake of clarity, the detection rod 16 is therefore depicted as a dashed line.

When the wind turbine blade 1 is at least vertically moved along the direction of view of fig. 4, the trolley unit 13 is at least partially and/or temporarily moved in accordance with the wind turbine blade 1, such that at least a section of the wind turbine blade 1 is avoided to get in touch with at least one structural element 22 of the wind turbine blade rack 100. Hereby, the wind turbine blade 1 is effectively protected from taking damage while loading it into or unloading it from a wind turbine rack 100.

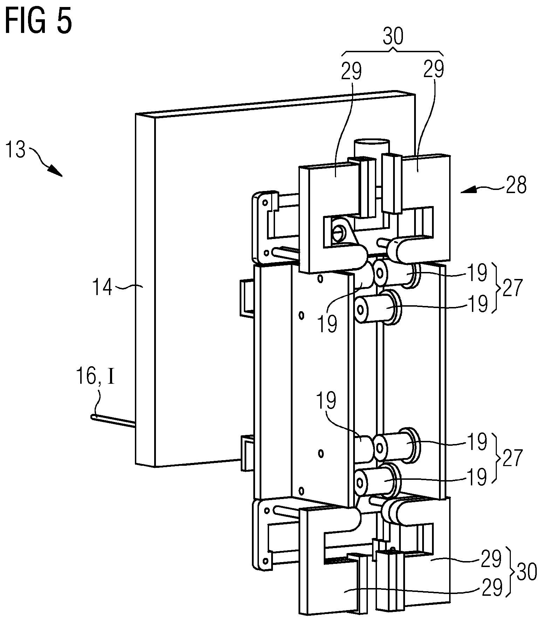

Fig. 5 shows a perspective view of a trolley unit 13. The trolley unit 13 comprises a plurality of rollers 19 wherein during a movement of the trolley unit 13 along a guiding rail 12, the rollers 19 roll on a surface of the guiding rail 12.

The trolley unit 13 comprises two pairs of rollers 27, wherein when the trolley unit is mounted on a guiding rail 12, each pair of rollers 27 encloses the guiding rail 12 at least partially and forms an at least partially form-fitting and/or force-fitting connection with the guiding rail 12. When the trolley unit 13 is moved along the guiding rail, each roller 19 of a pair of rollers 27 rolls on opposing surfaces of the guiding rail 12.

The trolley unit 13 further comprises a brake system 28 to slow down or stop a movement of the trolley unit 13 along a guiding rail 12. The brake system 28 comprises at least two brake shoes 29. With regard to fig. 5, the brake system 28 comprises two pairs of brake shoes 30, wherein the two brake shoes 29 of each of the pair of brake shoes 30 are at least partially arranged opposite of each other.

Each brake shoe 29 can at least partially be brought into frictional contact with at least one surface of a guiding rail 12 in order to slow down a movement of the trolley unit 13 relative to the guiding rail 12 and/or hold the trolley unit 13 in a fixed position on said guiding rail 12, preferably when the trolley unit 13 is mounted on said guiding rail 12. When the trolley unit 13 is mounted on the guiding rail 12, the brake shoes 29 of each pair of brake shoes 30 at least partially enclose the guiding rail 12 and can be brought into operative connection and/or frictional contact with opposing surfaces of the guiding rail 12.

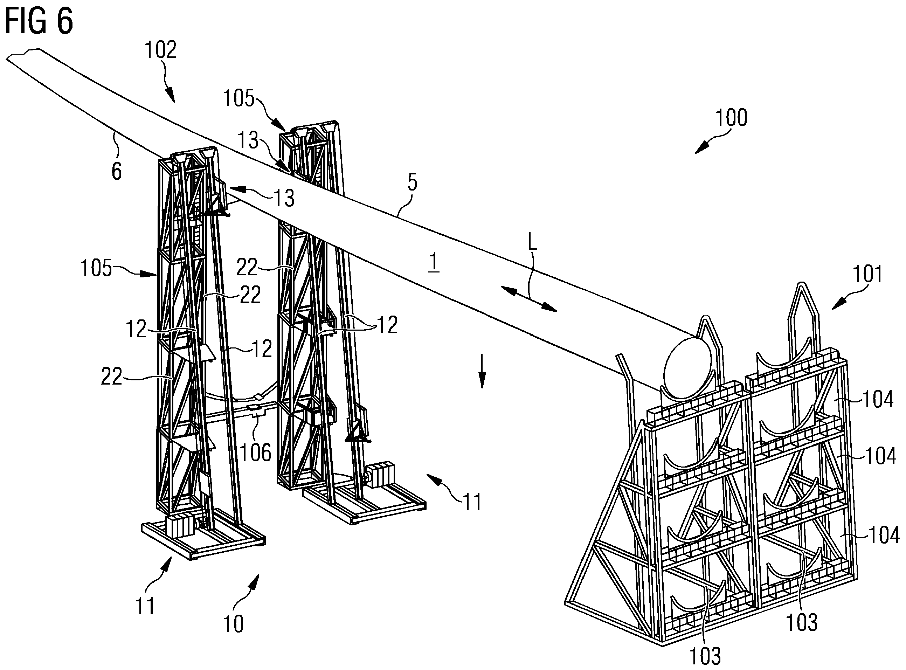

Fig. 6 shows a perspective view of a wind turbine blade rack 100 according to the invention for at least temporarily securing the position of at least one wind turbine blade 1 on a cargo vessel 200, comprising at least a first support structure 101 for at least partially receiving a root section 2 of at least one wind turbine blade 1 and a second support structure 102 for at least partially receiving an airfoil section 3 of at least one wind turbine blade 1, wherein the wind turbine blade rack 100 further comprises a blade guiding system 10 according to the invention.

The support structures 101, 102 comprise a plurality of structural elements 22 and are both at least partially provided as a truss construction which comprises a plurality of steel beams. The support structures 101, 102 are arranged at different positions along a longitudinal extension L of the wind turbine blade 1.

The second support structure 102 comprises a plurality of pillar elements 105, whereby only two pillar elements 105 are shown. Of course, the row of pillar elements 105 can be arbitrarily extended in accordance with the storage structure provided by the first support structure 101.

As a storage surface for at least one wind turbine blade 1, a crossbar 106 extends between the two pillar elements 105. The crossbar 106 may comprise additional means for fixation of a wind turbine blade 1. For the sake of clarity, only one crossbar 106 is shown. The number of crossbars 106 may be equal to the storage places provided by the first support structure 101.

During loading and/or unloading of the wind turbine rack 100, the wind turbine blades 1 must at least partially be lowered vertically between two pillar elements 105 of the second support structure 102 in order to be positioned on said crossbar 106. During this process, the wind turbine blades 1 may easily come into contact with structural elements 22 of the second support structure 102.

In fig. 6, support structures 101 and 102 are only shown partially for the sake of clarity. The first support structure may comprise additional storage places provided as additional rows 104 or columns 103. The second support structure 102 may comprise additional pillar elements 105. The number of pillar elements 105 may be one higher than the number of columns provided by the first support structure 101.

The blade guiding system shown in fig. 6 comprises two blade guiding units 11. Each blade guiding unit 11 is assigned to one pillar element 105 of the second support structure 102.

The wind turbine blade 1 is in a horizontal orientation with respect to an assumed connecting line between the leading edge 5 and the trailing edge 6, and the longitudinal extension L of the wind turbine blade 1 extends along a horizontal or essentially horizontal direction.

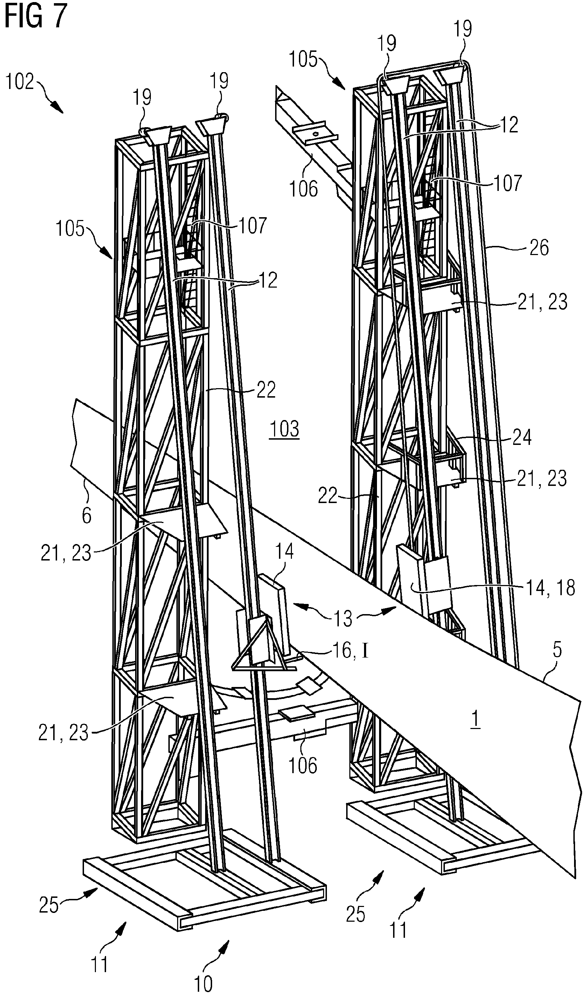

Fig. 7 shows a perspective view of the second support structure 102. A wind turbine blade 1 is at least partially guided through a column 103 of the wind turbine blade rack 100. To each pillar element 105, a blade guiding unit 11 is assigned.

Each blade guiding unit 11 comprises a plurality of maintenance platforms 21 which are used as connection elements 23 for connecting each blade guiding unit 11 to a pillar element 105.

Each pillar element 105 comprises at least one ladder 107, allowing a user to at least partially access said pillar element 105. The ladders 107 are part of an access system of the wind turbine blade rack 100. At least one blade guiding unit 11 and/or at least one maintenance platform 21 at least partially aligns with said access system and/or at least one ladder, such that the maintenance platform 21 is accessible via the ladder 107. For the sake of clarity, only one ladder 107 is shown in each pillar element 105. It may be provided that each pillar element 105 comprises a plurality of ladders 107, preferably to access said pillar element 105 from bottom to top.

While the wind turbine blade 1 is lowered into the desired position in the second support structure 102, at least one trolley unit 13 of each blade guiding unit 11 is moved in accordance with the wind turbine blade 1 in order to protect said wind turbine blade 1 from touching at least one structural element 22 of the wind turbine blade rack 100. With regard to fig. 7, two trolley units 13 of two separate blade guiding units 11 are at least temporarily moved in accordance with the wind turbine blade 1 in order to at least partially protect the leading edge 5 and the trailing edge 6 of said wind turbine blade 1 from taking damage.

While moving the trolley unit 13 in accordance with the wind turbine blade 1, the detection rod 16 of each trolley unit 13 is in continuous contact with at least a section of the wind turbine blade 1, in order to detect a movement of said wind turbine blade 1 relative to the trolley unit and move the trolley unit in accordance to said wind turbine blade 1.

In fig. 7 it is shown that as storage surfaces for wind turbine blades 1, multiple crossbars 106 are provided in a single column 103 of the second support structure 102. The crossbar 106 extends between the two pillar elements 105. The crossbars 106 comprise additional means for fixation of a wind turbine blade 1 and are pivotably mounted on at least one pillar element 105 in order to allow the passage of at least one wind turbine blade 1 past a cross member 106 during loading and/or unloading operations on the wind turbine blade rack 100.

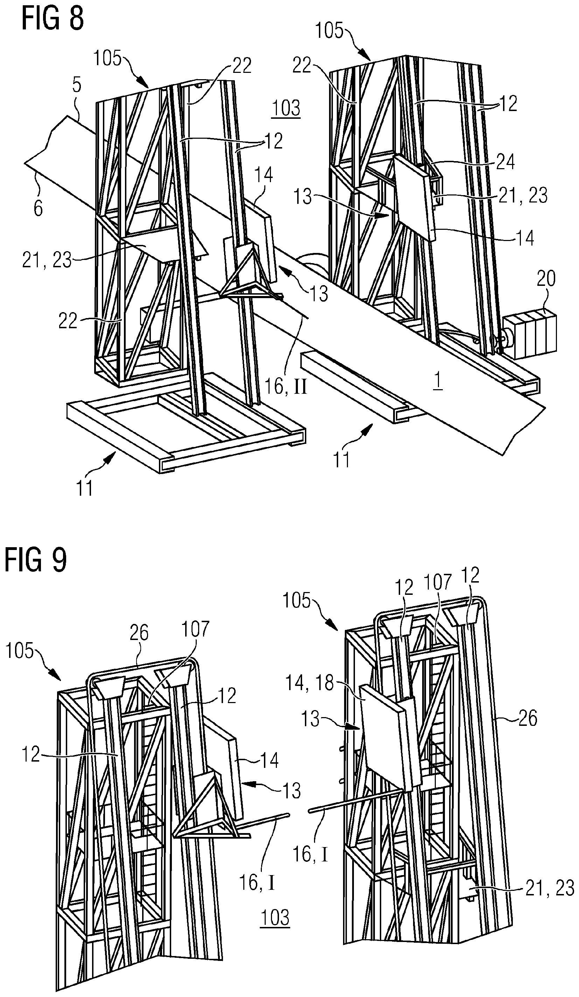

Fig. 8 shows a perspective view of the second support structure 102. The wind turbine blade 1 was guided successfully into the desired position within the wind turbine blade rack 100. The detection rod 16 is pivoted from the detection position I into the non-detection position II such that the detection rod 16 is no longer located under the wind turbine blade 1. Therefore, the trolley unit 13 can be moved up on the guiding rail in order to initiate a new loading operation for positioning another wind turbine blade 1 in the wind turbine blade rack 100.

Fig. 9 shows a perspective view of the second support structure 102. The trolley units 13 are located at the upper ends of guiding rails 12 for receiving a wind turbine blade 1 during a loading operation performed in the wind turbine blade rack 100 and guide at least a section of said wind turbine blade 1 while lowering it at least partially into column 103 of the wind turbine blade rack 100 and/or the second support structure 102.

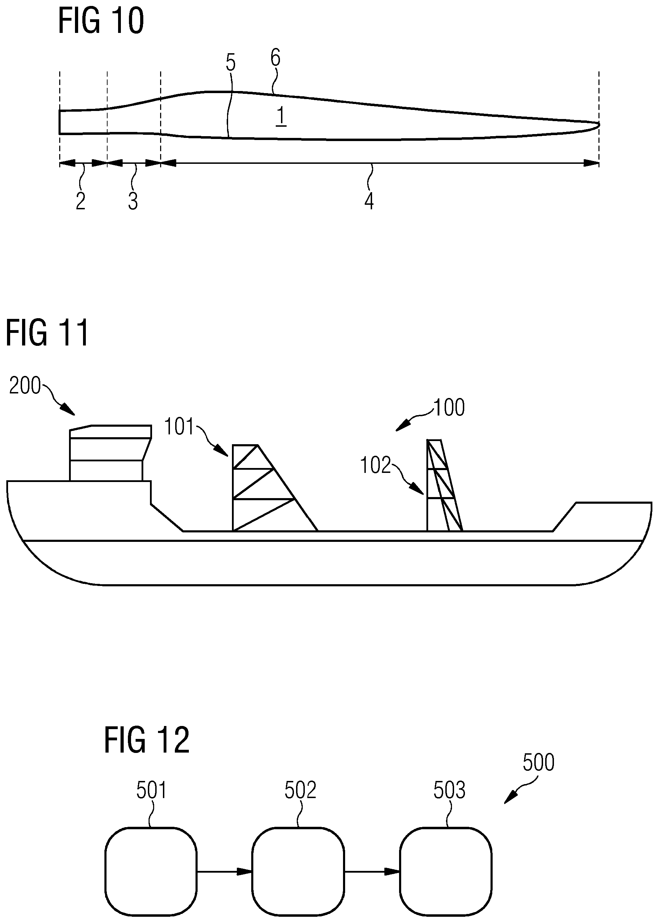

Fig. 10 shows a schematic view of a wind turbine blade 1. The wind turbine blade 1 comprises a leading edge 5 which faces the incident flow during operation and a trailing edge 6 which is turned away from the incident flow during operation. The blade may be divided into different sections 2, 3, 4.

The wind turbine blade 1 of fig. 10 comprises a root section 2, an airfoil section 3 and a transition section 4. The root section 2 comprises the blade root which is intended to be structurally coupled to the hub of the wind turbine in order to ensure that the wind turbine blade remains in connection with the wind turbine hub during wind turbine operation. The root section at least partially has a circular or substantially circular cross section and/or has an insignificant contribution to the generation of lift when the wind turbine blade is exposed to wind. In the airfoil section 3, the outer shape of the blade has an airfoil contour to generate a lift force in windy conditions. The transition section 4 is provided between the root section 2 and the airfoil section 3. In the transition section 4, the outer profile of the wind turbine blade 1 is continuously transitioned from the root section profile to the airfoil section profile. The airfoil section 3 extends from the transition section 4 to the tip of the wind turbine blade 1.

Fig. 11 shows a cargo vessel 200 according to the invention, for the at least temporary transport of at least one wind turbine blade 1. The cargo vessel 200 comprises a wind turbine blade rack 100 according to the invention. For reasons of simplification, no wind turbine blade 1 is shown in the wind turbine blade rack 100.

Fig. 12 shows a schematic view of a method 500 for use of a wind turbine blade rack 100 according to the invention, the method 500 comprising the following steps:
Moving 501 at least one wind turbine blade 1 in proximity of at least one support structure 101, 102 of the wind turbine blade rack 100 during a loading operation performed on the wind turbine blade rack 100,
detecting 502 a movement of the wind turbine blade 1 relative to at least one trolley unit 13 and/or spacer element 14 of a blade guiding system 10 of the wind turbine blade rack 100, moving 503 at least one trolley unit 13 and/or spacer element 14 at least temporarily in accordance with the wind turbine blade 1 for at least temporarily avoiding contact between at least one support structure 101, 102 of the wind turbine blade rack 100 and at least a section of the wind turbine blade 1.

## Claims

1. Blade guiding system (10) for guiding at least one wind turbine blade (1) during a positioning of the wind turbine blade (1) in or a removal of the wind turbine blade (1) from a wind turbine blade rack (100), comprising at least one blade guiding unit (11), the blade guiding unit (11) further comprising at least one guiding rail (12) and at least one trolley unit (13), wherein said trolley unit (13) is movably arranged on said guiding rail (12) such that said trolley unit (13) is at least partially movable along said guiding rail (12) , the blade guiding system being **characterized in that** said trolley unit (13) comprises at least one spacer element (14) for at least temporarily avoiding contact between at least a section of the wind turbine blade rack (100) and at least a section of the wind turbine blade (1) when positioning the wind turbine blade (1) in or removing the wind turbine blade (1) from the wind turbine blade rack (100).

2. Blade guiding system (10) according to claim 1,
**characterized in that,**
the trolley unit (13) comprises a detection unit (15) for detecting a movement of a wind turbine blade (1) relative to said trolley unit (13) in a detection range (R) of the detection unit (15).

3. Blade guiding system (10) according to claim 2,
**characterized in that,**
the detection unit (15) comprises at least one detection rod for at least temporarily establishing and/or maintaining a contact between the trolley unit (13) and at least one wind turbine blade (1) and at least one sensor element (17), wherein an impact of force on the detection rod (16) is detectable by the sensor element (17).

4. Blade guiding system (10) according to claim 3,
**characterized in that,**
the detection rod (16) is pivotably connected to the trolley unit (13), wherein the detection rod (16) can be pivoted at least between a detection position (I) and a non-detection position (II).

5. Blade guiding system (10) according to claim 4,
**characterized in that,**
in the detection position (I), the detection rod (16) is oriented inclined to at least one guiding surface (18) of the spacer element (14) and/or in the non-detecting position (II), the detection rod (16) is oriented parallel or essentially parallel to at least one guiding surface (18) of the spacer element (14).

6. Blade guiding system (10) according to any of
claims 3 - 5,
**characterized in that,**
the detection rod (16) is at least partially made from a plastic, preferably from a fiber reinforced plastic.

7. Blade guiding system (10) according to any of the preceding claims,
**characterized in that,**
the trolley unit (13) comprises at least one pair of rollers (27), wherein said pair of rollers (27) encloses the guiding rail (12) at least partially.

8. Blade guiding system (10) according to any of the preceding claims,
**characterized in that,**
the blade guiding unit (11) comprises at least one drive unit (20), wherein said drive unit (20) is operatively connected to the trolley unit (13) such that said trolley unit (13) can be moved at least partially along the guiding rail (12) by the drive unit (20).

9. Blade guiding system (10) according to one of the preceding claims,
**characterized in that,**
at least one spacer element (14) has at least partially a plate-like shape and/or is at least partially made of rubber material and/or an elastomer.

10. Blade guiding system (10) according to one of the preceding claims,
**characterized in that,**
the blade guiding unit (11) comprises at least one maintenance platform (21) for enabling a user to access at least one guiding rail (12) at least partially.

11. Wind turbine blade rack (100) for at least temporarily securing the position of at least one wind turbine blade (1), comprising at least a first support structure (101) for at least partially receiving a root section (2) of at least one wind turbine blade (1), a second support structure (102) for at least partially receiving an airfoil section (3) of at least one wind turbine blade (1) and at least one blade guiding system (10) according to any of claims 1 - 10.

12. Cargo vessel (200) for the transport of at least one wind turbine blade (1) comprising at least one wind turbine blade rack (100) according to claim 11.

13. Method (500) for use of a wind turbine blade rack (100), wherein the wind turbine blade rack (100) is a wind turbine blade rack (100) according to claim 11, comprising at least the following steps:
Moving (501) at least one wind turbine blade (1) in proximity of at least a section of the wind turbine blade rack (100) during a loading operation performed on the wind turbine blade rack (100),
detecting (502) a movement of the wind turbine blade (1) relative to at least one trolley unit (13) and/or spacer element (14) of a blade guiding system (10) of the wind turbine blade rack (100),
moving (503) at least one trolley unit (13) and/or spacer element (14) at least temporarily in accordance with the wind turbine blade (1) for at least temporarily avoiding contact between at least a section of the wind turbine blade rack (100) and at least a section of the wind turbine blade (1).

14. Method (500) according to claim 13,
**characterized in that,**
additionally, preferably after step c), at least one of the following steps is performed:
Moving (504) at least one wind turbine blade (1) in proximity of at least a section of the wind turbine blade rack (100) during an unloading operation performed on the wind turbine blade rack (100),
detecting (505) a movement of the wind turbine blade (1) relative to at least one trolley unit (13) and/or spacer element (14) of a blade guiding system (10) of the wind turbine blade rack (100),
moving (506) at least one trolley unit (13) and/or spacer element (14) at least temporarily in accordance with the wind turbine blade (1) for at least temporarily avoiding contact between at least a section of the wind turbine blade rack (100) and at least a section of the wind turbine blade (1).

## Patentansprüche

1. Blattführungssystem (10) zum Führen mindestens eines Windenergieanlagenblatts (1) während einer Positionierung des Windenergieanlagenblatts (1) in oder einer Entfernung des Windenergieanlagenblatts (1) aus einem Blattgestell (100) einer Windenergieanlage, umfassend mindestens eine Blattführungseinheit (11), wobei die Blattführungseinheit (11) ferner mindestens eine Führungsschiene (12) und mindestens eine Wageneinheit (13) umfasst, wobei die Wageneinheit (13) derart bewegbar auf der Führungsschiene (12) angeordnet ist, dass die Wageneinheit (13) mindestens teilweise entlang der Führungsschiene (12) bewegbar ist, wobei das Blattführungssystem **dadurch gekennzeichnet ist, dass** die Wageneinheit (13) mindestens ein Abstandselement (14) zum mindestens vorübergehenden Vermeiden eines Kontakts zwischen mindestens einem Abschnitt des Blattgestells (100) einer Windenergieanlage und mindestens einem Abschnitt des Windenergieanlagenblatts (1) beim Positionieren des Windenergieanlagenblatts (1) in oder beim Entfernen des Windenergieanlagenblatts (1) aus dem Blattgestell (100) einer Windenergieanlage umfasst.

2. Blattführungssystem (10) nach Anspruch 1,
**dadurch gekennzeichnet, dass**
die Wageneinheit (13) eine Erfassungseinheit (15) zum Erfassen einer Bewegung eines Windenergieanlagenblatts (1) relativ zu der Wageneinheit (13) in einem Erfassungsbereich (R) der Erfassungseinheit (15) umfasst.

3. Blattführungssystem (10) nach Anspruch 2,
**dadurch gekennzeichnet, dass**
die Erfassungseinheit (15) mindestens eine Erfassungsstange zum mindestens vorübergehenden Herstellen und/oder Aufrechterhalten eines Kontakts zwischen der Wageneinheit (13) und mindestens einem Windenergieanlagenblatt (1) und mindestens ein Sensorelement (17) umfasst, wobei eine Kraftwirkung auf die Erfassungsstange (16) durch das Sensorelement (17) erfassbar ist.

4. Blattführungssystem (10) nach Anspruch 3,
**dadurch gekennzeichnet, dass**
die Erfassungsstange (16) schwenkbar mit der Wageneinheit (13) verbunden ist, wobei die Erfassungsstange (16) mindestens zwischen einer Erfassungsposition (I) und einer Nicht-Erfassungsposition (II) geschwenkt werden kann.

5. Blattführungssystem (10) nach Anspruch 4,
**dadurch gekennzeichnet, dass**
in der Erfassungsposition (I) die Erfassungsstange (16) geneigt zu mindestens einer Führungsfläche (18) des Abstandselements (14) ausgerichtet ist und/oder in der Nicht-Erfassungsposition (II) die Erfassungsstange (16) parallel oder im Wesentlichen parallel zu mindestens einer Führungsfläche (18) des Abstandselements (14) ausgerichtet ist.

6. Blattführungssystem (10) nach einem der Ansprüche 3-5,
**dadurch gekennzeichnet, dass**
die Erfassungsstange (16) mindestens teilweise aus einem Kunststoff, vorzugsweise aus einem faserverstärkten Kunststoff, hergestellt ist.

7. Blattführungssystem (10) nach einem der vorhergehenden Ansprüche,
**dadurch gekennzeichnet, dass**
die Wageneinheit (13) mindestens ein Rollenpaar (27) umfasst, wobei das Rollenpaar (27) die Führungsschiene (12) mindestens teilweise umschließt.

8. Blattführungssystem (10) nach einem der vorhergehenden Ansprüche,
**dadurch gekennzeichnet, dass**
die Blattführungseinheit (11) mindestens eine Antriebseinheit (20) umfasst, wobei die Antriebseinheit (20) derart funktionsfähig mit der Wageneinheit (13) verbunden ist, dass die Wageneinheit (13) mindestens teilweise durch die Antriebseinheit (20) entlang der Führungsschiene (12) bewegt werden kann.

9. Blattführungssystem (10) nach einem der vorhergehenden Ansprüche,
**dadurch gekennzeichnet, dass**
mindestens ein Abstandselement (14) mindestens teilweise eine plattenartige Form aufweist und/oder mindestens teilweise aus Gummimaterial und/oder einem Elastomer hergestellt ist.

10. Blattführungssystem (10) nach einem der vorhergehenden Ansprüche,
**dadurch gekennzeichnet, dass**
die Blattführungseinheit (11) mindestens eine Wartungsplattform (21) umfasst, um es einem Benutzer zu ermöglichen, mindestens teilweise auf mindestens eine Führungsschiene (12) zuzugreifen.

11. Blattgestell (100) einer Windenergieanlage zum mindestens vorübergehenden Sichern der Position mindestens eines Windenergieanlagenblatts (1), umfassend mindestens eine erste Trägerstruktur (101) zum mindestens teilweisen Aufnehmen eines Fußabschnitts (2) mindestens eines Windenergieanlagenblatts (1), eine zweite Trägerstruktur (102) zum mindestens teilweisen Aufnehmen eines Tragflächenabschnitts (3) mindestens eines Windenergieanlagenblatts (1) und mindestens ein Blattführungssystem (10) nach einem der Ansprüche 1 - 10.

12. Frachtschiff (200) für den Transport mindestens eines Windenergieanlagenblatts (1), umfassend mindestens ein Blattgestell (100) einer Windenergieanlage nach Anspruch 11.

13. Verfahren (500) zur Verwendung eines Blattgestells (100) einer Windenergieanlage, wobei das Blattgestell (100) einer Windenergieanlage ein Blattgestell (100) einer Windenergieanlage nach Anspruch 11 ist, umfassend mindestens die folgenden Schritte:
Bewegen (501) mindestens eines Windenergieanlagenblatts (1) in der Nähe mindestens eines Abschnitts des Blattgestells einer Windenergieanlage (100) während eines Ladevorgangs, der an dem Blattgestell (100) einer Windenergieanlage durchgeführt wird,
Erkennen (502) einer Bewegung des Windenergieanlagenblatts (1) relativ zu mindestens einer Wageneinheit (13) und/oder einem Abstandselement (14) eines Blattführungssystems (10) des Blattgestells (100) einer Windenergieanlage,
Bewegen (503) mindestens einer Wageneinheit (13) und/oder eines Abstandselements (14) mindestens vorübergehend gemäß dem Windenergieanlagenblatt (1) zum mindestens vorübergehenden Vermeiden eines Kontakts zwischen mindestens einem Abschnitt des Blattgestells (100) einer Windenergieanlage und mindestens einem Abschnitt des Windenergieanlagenblatts (1).

14. Verfahren (500) nach Anspruch 13,
**dadurch gekennzeichnet, dass**
zusätzlich, vorzugsweise nach Schritt c), mindestens einer der folgenden Schritte durchgeführt wird:
Bewegen (504) mindestens eines Windenergieanlagenblatts (1) in der Nähe mindestens eines Abschnitts des Blattgestells (100) einer Windenergieanlage während eines Entladevorgangs, der an dem Blattgestell (100) einer Windenergieanlage durchgeführt wird,
Erkennen (505) einer Bewegung des Windenergieanlagenblatts (1) relativ zu mindestens einer Wageneinheit (13) und/oder einem Abstandselement (14) eines Blattführungssystems (10) des Blattgestells (100) einer Windenergieanlage,
Bewegen (506) mindestens einer Wageneinheit (13) und/oder eines Abstandselements (14) mindestens vorübergehend gemäß dem Windenergieanlagenblatt (1) zum mindestens vorübergehenden Vermeiden eines Kontakts zwischen mindestens einem Abschnitt des Blattgestells (100) einer Windenergieanlage und mindestens einem Abschnitt des Windenergieanlagenblatts (1).

## Revendications

1. Système de guidage de pale (10) pour guider au moins une pale d'éolienne (1) pendant un positionnement de la pale d'éolienne (1) dans ou un retrait de la pale d'éolienne (1) à partir d'un râtelier de pales d'éolienne (100), comprenant au moins une unité de guidage de pale (11), l'unité de guidage de pale (11) comprenant en outre au moins un rail de guidage (12) et au moins une unité de chariot (13), dans lequel ladite unité de chariot (13) est agencée de manière mobile sur ledit rail de guidage (12) de telle sorte que ladite unité de chariot (13) est au moins partiellement mobile le long dudit rail de guidage (12), le système de guidage de pale étant **caractérisé en ce que** ladite unité de chariot (13) comprend au moins un élément d'espacement (14) pour éviter au moins temporairement un contact entre au moins une section du râtelier de pales d'éolienne (100) et au moins une section de la pale d'éolienne (1) lors du positionnement de la pale d'éolienne (1) dans ou du retrait de la pale d'éolienne (1) à partir du râtelier de pales d'éolienne (100).

2. Système de guidage de pale (10) selon la revendication 1,
**caractérisé en ce que**
l'unité de chariot (13) comprend une unité de détection (15) pour détecter un mouvement d'une pale d'éolienne (1) par rapport à ladite unité de chariot (13) dans une plage de détection (R) de l'unité de détection (15).

3. Système de guidage de pale (10) selon la revendication 2,
**caractérisé en ce que**
l'unité de détection (15) comprend au moins une tige de détection pour établir et/ou maintenir au moins temporairement un contact entre l'unité de chariot (13) et au moins une pale d'éolienne (1) et au moins un élément capteur (17), dans lequel un impact de force sur la tige de détection (16) est détectable par l'élément capteur (17).

4. Système de guidage de pale (10) selon la revendication 3,
**caractérisé en ce que**
la tige de détection (16) est reliée de manière pivotante à l'unité de chariot (13), dans lequel la tige de détection (16) peut pivoter au moins entre une position de détection (I) et une position de non-détection (II).

5. Système de guidage de pale (10) selon la revendication 4,
**caractérisé en ce que,**
dans la position de détection (I), la tige de détection (16) est orientée de manière inclinée par rapport à au moins une surface de guidage (18) de l'élément d'espacement (14) et/ou, dans la position de non-détection (II), la tige de détection (16) est orientée parallèlement ou essentiellement parallèlement à au moins une surface de guidage (18) de l'élément d'espacement (14).

6. Système de guidage de pale (10) selon l'une quelconque des revendications 3 à 5,
**caractérisé en ce que**
la tige de détection (16) est au moins partiellement constituée d'une matière plastique, de préférence d'une matière plastique renforcée par des fibres.

7. Système de guidage de pale (10) selon l'une quelconque des revendications précédentes,
**caractérisé en ce que**
l'unité de chariot (13) comprend au moins une paire de rouleaux (27), dans lequel ladite paire de rouleaux (27) entoure au moins partiellement le rail de guidage (12).

8. Système de guidage de pale (10) selon l'une quelconque des revendications précédentes,
**caractérisé en ce que**
l'unité de guidage de pale (11) comprend au moins une unité d'entraînement (20), dans lequel ladite unité d'entraînement (20) est reliée de manière opérationnelle à l'unité de chariot (13) de telle sorte que ladite unité de chariot (13) peut être déplacée au moins partiellement le long du rail de guidage (12) par l'unité d'entraînement (20).

9. Système de guidage de pale (10) selon l'une des revendications précédentes,
**caractérisé en ce qu'**
au moins un élément d'espacement (14) présente au moins partiellement une forme de plaque et/ou est au moins partiellement constitué d'un matériau en caoutchouc et/ou d'un élastomère.

10. Système de guidage de pale (10) selon l'une des revendications précédentes,
**caractérisé en ce que**
l'unité de guidage de pale (11) comprend au moins une plateforme de maintenance (21) pour permettre à un utilisateur d'accéder au moins partiellement à au moins un rail de guidage (12).

11. Râtelier de pales d'éolienne (100) pour sécuriser au moins temporairement la position d'au moins une pale d'éolienne (1), comprenant au moins une première structure de support (101) pour recevoir au moins partiellement une section de pied (2) d'au moins une pale d'éolienne (1), une seconde structure de support (102) pour recevoir au moins partiellement une section de profil aérodynamique (3) d'au moins une pale d'éolienne (1) et au moins un système de guidage de pale (10) selon l'une quelconque des revendications 1 à 10.

12. Navire de charge (200) pour le transport d'au moins une pale d'éolienne (1) comprenant au moins un râtelier de pales d'éolienne (100) selon la revendication 11.

13. Procédé (500) pour l'utilisation d'un râtelier de pales d'éolienne (100), dans lequel le râtelier de pales d'éolienne (100) est un râtelier de pales d'éolienne (100) selon la revendication 11, comprenant au moins les étapes suivantes consistant à :
déplacer (501) au moins une pale d'éolienne (1) à proximité d'au moins une section du râtelier de pales d'éolienne (100) pendant une opération de chargement réalisée sur le râtelier de pales d'éolienne (100), détecter (502) un mouvement de la pale d'éolienne (1) par rapport à au moins une unité de chariot (13) et/ou un élément d'espacement (14) d'un système de guidage de pale (10) du râtelier de pales d'éolienne (100), déplacer (503) au moins une unité de chariot (13) et/ou un élément d'espacement (14) au moins temporairement en accord avec la pale d'éolienne (1) pour éviter au moins temporairement un contact entre au moins une section du râtelier de pales d'éolienne (100) et au moins une section de la pale d'éolienne (1).

14. Procédé (500) selon la revendication 13,
**caractérisé en ce que,**
additionnellement, de préférence après l'étape c), au moins l'une des étapes suivantes est réalisée :
déplacer (504) au moins une pale d'éolienne (1) à proximité d'au moins une section du râtelier de pales d'éolienne (100) pendant une opération de déchargement réalisée sur le râtelier de pales d'éolienne (100),
détecter (505) un mouvement de la pale d'éolienne (1) par rapport à au moins une unité de chariot (13) et/ou un élément d'espacement (14) d'un système de guidage de pale (10) du râtelier de pales d'éolienne (100),
déplacer (506) au moins une unité de chariot (13) et/ou un élément d'espacement (14) au moins temporairement en accord avec la pale d'éolienne (1) pour éviter au moins temporairement un contact entre au moins une section du râtelier de pales d'éolienne (100) et au moins une section de la pale d'éolienne (1).
